# FASCICULE DE BREVET EUROPEEN

(11) **EP 1 169 901 B1**
(45) Date de publication et mention de la délivrance du brevet: **13.09.2006**
(21) Numéro de dépôt: 01440202.8
(22) Date de dépôt: 02.07.2001
(51) Int. Cl.: A01B 33/12

(54) **Machine de travail du sol**
Bodenbearbeitungsmaschine
Soil working machine

(30) Priorité: 07.07.2000 FR 0009171
(43) Date de publication de la demande: 09.01.2002
(73) Titulaire: KUHN S.A., 67706 Saverne Cedex (FR)
(72) Inventeur: Teitgen, Herve, 57570 Breistroff La Grande (FR); Oberle, Edmond, 6770 Haegen (FR)

(56) Documents cités:
- DE-A- 2 950 044
- FR-A- 2 420 293
- FR-A- 2 430 172
- GB-A- 786 990
- US-A- 4 664 201

## Description

La présente invention se rapporte à une machine de travail du sol comportant
- un châssis,
- un rotor, lié audit châssis, entraîné en rotation lors du travail autour d'un axe, sensiblement horizontal, dirigé transversalement à une direction d'avance de ladite machine,
- au moins un capot lié audit châssis au moyen d'une articulation de type pivot dont l'axe est sensiblement parallèle à l'axe de rotation dudit rotor, et
- au moins un dispositif de retenue réglable qui limite, uniquement vers le bas, le débattement angulaire dudit capot autour de ladite articulation.

Une telle machine de travail du sol, réalisée sous forme de fraise rotative, est connue par le document **FR 2 420 293.** Cette machine connue comporte un capot lié, à l'une de ses extrémités, au châssis au moyen de charnières. En modifiant la position angulaire du capot par rapport au châssis, l'utilisateur peut régler un émiettement plus ou moins important de la bande de terre travaillée par le rotor. Pour ce faire, cette machine connue comporte également un dispositif de retenue constitué d'une chaîne. Ladite chaîne est liée d'une part au châssis, et d'autre part au capot. La position angulaire du capot est fonction de la longueur de ladite chaîne.

Lors du transport, la fraise rotative subit des accélérations notamment verticales. Sur ce type de machine, ces accélérations provoquent fréquemment un battement dudit capot. Ce battement engendre, à son tour, des chocs violents et répétés sur la chaîne et les charnières. Cette machine connue comporte bien un dispositif d'amortissement intercalé entre ladite chaîne et ledit capot. Mais ce dispositif d'amortissement ne permet que d'atténuer les chocs, et son coût de fabrication est relativement important.

Le but de la présente invention consiste à remédier à cet inconvénient de l'état de la technique en réalisant un dispositif, peu onéreux, supprimant ledit battement du capot lors du transport.

A cet effet, la machine de travail du sol de la présente invention se caractérise par le fait qu'elle comporte en sus au moins un dispositif de verrouillage qui limite vers le haut, lors du transport, le débattement angulaire dudit capot en prenant appui contre une butée fixée audit capot afin de maintenir ce dernier dans la position définie par le réglage dudit dispositif de retenue. Le battement dudit capot est donc supprimé. Ainsi, ladite chaîne et ladite articulation ne subissent plus de choc lors du transport.

D'autres caractéristiques de l'invention apparaîtront dans les sous-revendications et dans la description suivante d'exemples de réalisation non limitatifs de l'invention représentés sur les dessins annexés sur lesquels :
- la **figure 1** représente une vue latérale d'une machine de travail du sol, conforme à l'invention, en position de travail,
- la **figure 2** représente, suivant une coupe longitudinale, la machine de la figure 1,
- la **figure 3** représente, suivant la vue de la figure 2, la machine de travail du sol en position de transport,
- la **figure 4** représente, en coupe, l'autre vue latérale de la machine de travail du sol, en position de travail et avec un réglage du capot différent,
- la **figure 5** représente, suivant la vue de la figure 4, la machine de travail du sol en position de transport.

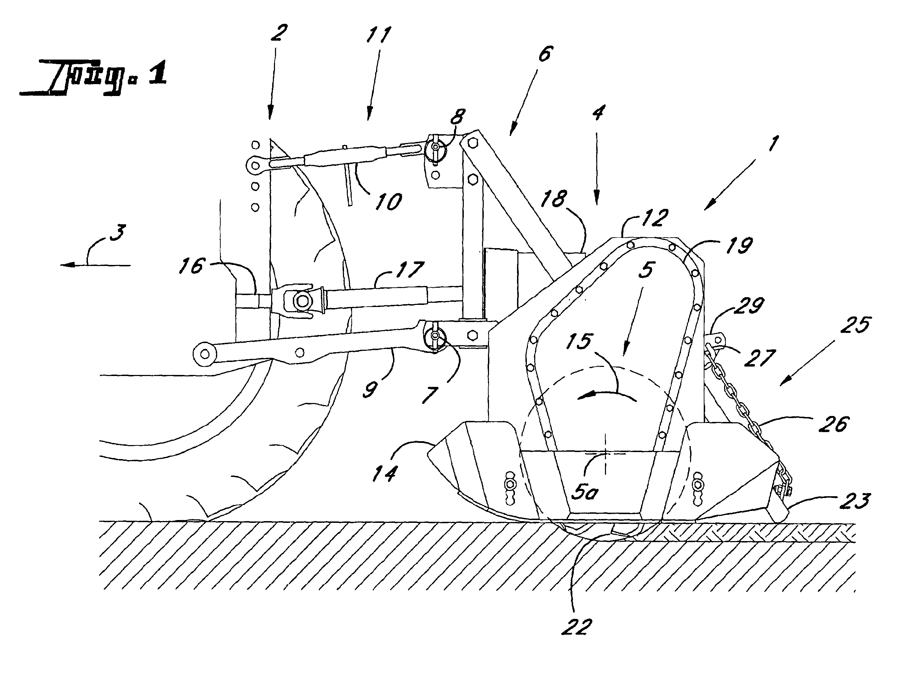

Les figures 1 à 5 montrent une machine de travail du sol, conforme à la présente invention, réalisée sous la forme d'une fraise rotative (1). Celle-ci est attelée, sur la figure 1, à un véhicule tracteur (2) partiellement représenté. Lors du travail, ladite fraise rotative (1) est tirée par ledit véhicule tracteur (2) suivant une direction d'avance (3), et elle prépare une bande de terre en vue, par exemple, des travaux de semis. A cet effet, ladite fraise rotative (1) se compose, entre autres, d'un châssis (4) et d'un rotor (5) destiné à travailler ledit sol.

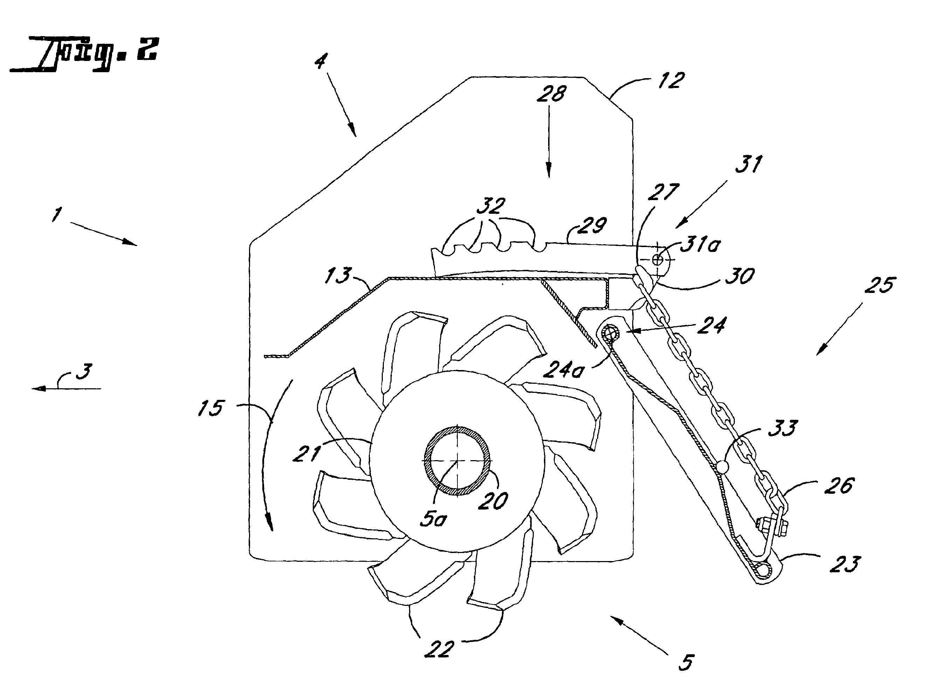

Ledit châssis (4) comporte notamment un chevalet (6) muni de deux points d'attelage inférieurs (7) et un point d'attelage supérieur (8). Lesdits points d'attelage (7, 8) sont prévus, d'une manière connue de l'homme de l'art, pour l'accouplement de ladite fraise rotative (1) aux bras inférieurs (9) et au bras supérieur (10) de l'attelage trois points (11) dudit véhicule tracteur (2). Ledit châssis (4) comporte également deux parois latérales (12) reliées entre elles au moins par un capot supérieur (13) (figure 2).

Lors du travail, ledit châssis (4) repose au moins partiellement sur le sol au moyen de deux patins (14). Chaque patin (14) est disposé à l'extrémité inférieure d'une paroi latérale respective (12) dudit châssis (4). Dans cet exemple de réalisation, la position desdits patins (14) par rapport audit châssis (4) peut être modifiée suivant une direction sensiblement verticale. Ainsi l'utilisateur peut avantageusement régler la profondeur de travail de ladite fraise rotative (1).

Ledit rotor (5) est lié, à chacune de ses extrémités, auxdites parois latérales (12) au moyen d'une articulation respective de telle façon que l'axe longitudinal (5a) du rotor (5) soit sensiblement horizontal et sensiblement perpendiculaire à ladite direction d'avance (3). Lors du travail, ledit rotor (5) est entraîné en rotation, autour de son axe longitudinal (5a), dans un sens anti-horaire (15) compte tenu de la figure 1. A cet effet, ladite fraise rotative (1) comporte également des éléments de transmission qui relient, d'une manière connue de l'homme de l'art, ledit rotor (5) à une prise de force (16) du véhicule tracteur (2). Ces éléments de transmission se composent notamment d'un arbre de transmission à joints universels (17) qui transmet un mouvement de la prise de force (16) à un carter central (18). Ledit carter central (18) entraîne, à son tour, le rotor (5) par l'intermédiaire d'un carter latéral (19).

Les figures 2 à 5 représentent, suivant une coupe longitudinale, les deux vues latérales de ladite fraise rotative (1). Dans un but de simplification, divers éléments présents sur la figure 1 ne sont plus représentés sur les figures 2 à 5. Ces éléments sont notamment le chevalet (6), les éléments de transmissions et les patins (14).

Comme visible sur les figures 2 à 5, ledit rotor (5) est constitué d'un tube (20) sur lequel plusieurs supports (21) sont fixés. Ledit rotor (5) comporte également plusieurs outils (22) liés respectivement à un support (21) correspondant. Lors du travail lesdits outils (22), en venant frapper le sol, travaillent la terre tout en broyant d'éventuels résidus. La projection de la terre travaillée contre un capot (23) accentue encore l'émiettement de celle-ci.

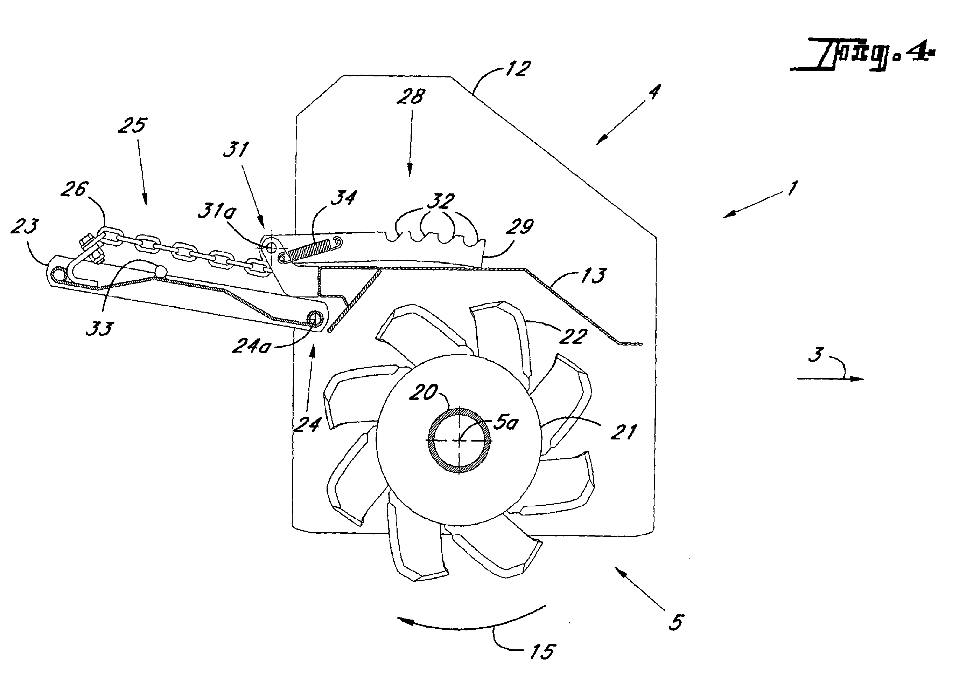

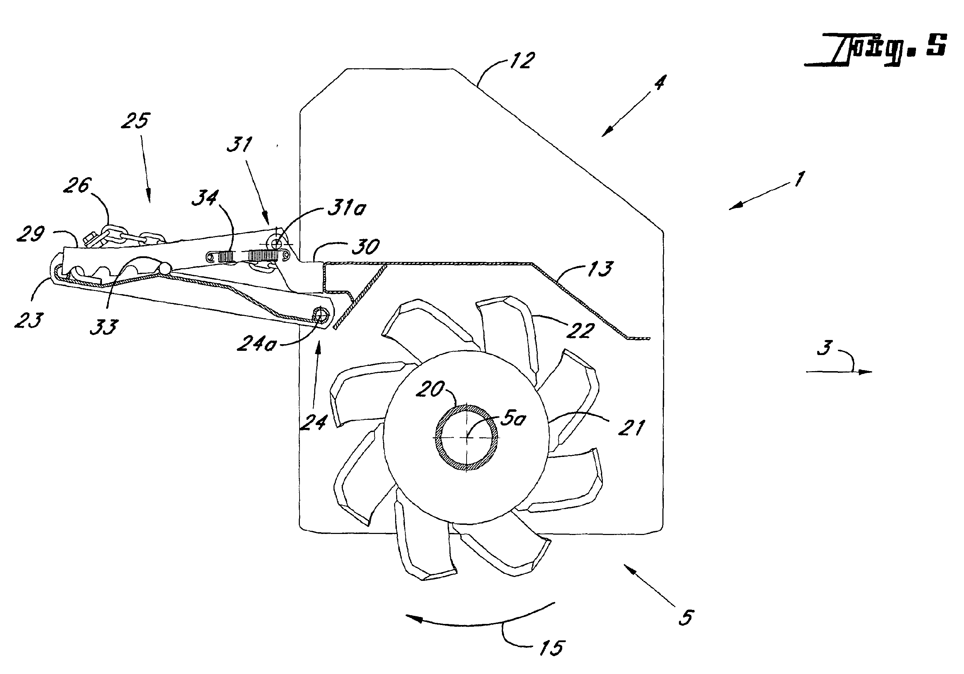

Compte tenu de la direction d'avance (3), ledit capot (23) est disposé derrière ledit rotor (5) et il s'étend sensiblement sur toute la largeur de ce dernier. Ledit capot (23) est avantageusement lié, à l'une de ses extrémités, audit châssis (4) au moyen d'une articulation (24) de type pivot dont l'axe (24a) est sensiblement parallèle à l'axe de rotation (5a) dudit rotor (5). Ainsi ledit capot (23) peut être pivoté par rapport audit châssis (4), ce qui permet à l'utilisateur de régler l'émiettement de la terre travaillée. En effet lorsque le capot (23) est fermé, c'est-à-dire en position sensiblement verticale (figures 1, 2 et 3), la terre est travaillée plus énergiquement d'où un meilleur émiettement. Par contre lorsque le capot (23) est ouvert, c'est à dire en position sensiblement horizontale (figures 4 et 5), l'émiettement est moindre.

Dans l'exemple de réalisation représenté sur les figures, ledit capot (23) a naturellement tendance, par l'action de son poids, à rester dans une position sensiblement verticale. Pour permettre un émiettement moindre, ladite fraise rotative (1) comporte en sus un dispositif de retenue (25) qui permet d'écarter ledit capot (23) de cette position sensiblement verticale. Ledit dispositif de retenue (25) est avantageusement réglable. Ainsi la position dudit capot (23) et donc l'émiettement peuvent être parfaitement adaptés à toutes les conditions de travail. De plus, ledit dispositif de retenue (25) permet avantageusement audit capot (23) de pivoter librement au-delà de la position réglée. C'est-à-dire que ledit dispositif de retenue (25) limite uniquement vers le bas le débattement angulaire dudit capot (23) par rapport à ladite articulation (24). Ainsi, ladite fraise rotative (1) peut parfaitement suivre les dénivellations du sol ou évacuer un corps étranger, par exemple une pierre, sans risque de déformer ledit capot (23).

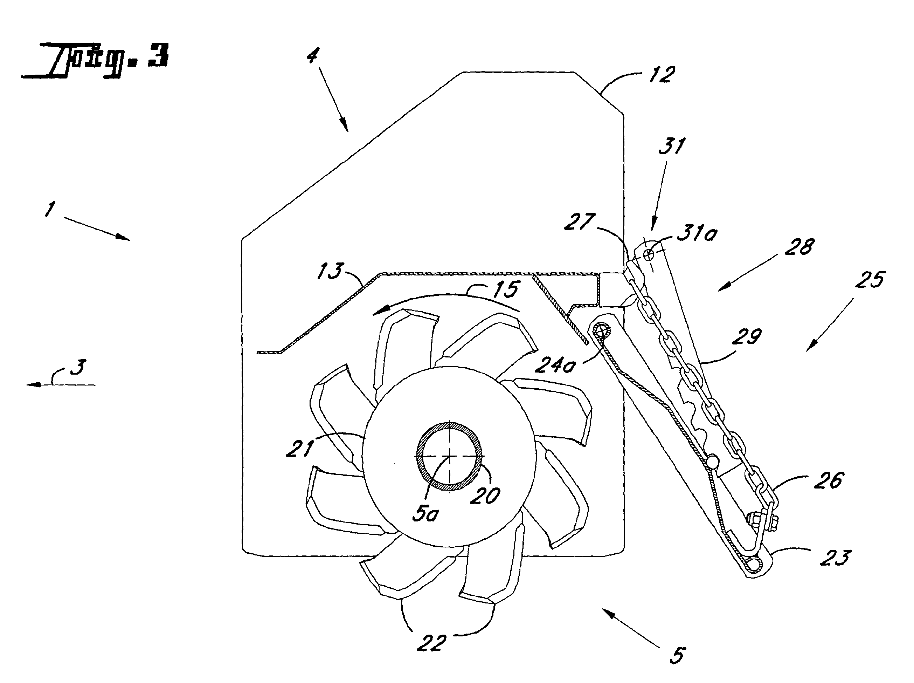

Dans l'exemple de réalisation représenté sur les figures, ledit dispositif de retenue (25) est constitué d'une chaîne (26) liée d'une part audit châssis (4) et d'autre part audit capot (23). On voit plus précisément sur les figures 2 et 3 que ladite chaîne (26) est liée audit châssis (4) au moyen d'un crochet (27), lui-même étant fixé audit capot supérieur (13). D'une manière connue de l'homme du métier et comme visible sur les figures 2 et 4, la position angulaire dudit capot (23) dépend de l'emplacement, dans ladite chaîne (26), du maillon pris dans ledit crochet (27). Ladite chaîne (26) est avantageusement disposée dans un plan vertical contenant le centre de masse dudit capot (23).

Selon une caractéristique de la présente invention, ladite fraise rotative (1) comporte également un dispositif de verrouillage (28). Ledit dispositif de verrouillage (28) doit éviter que les accélérations, subies par ladite fraise rotative (1) lors du transport, engendrent un battement dudit capot (23) et donc des chocs sur ledit dispositif de retenue (25) et ladite articulation (24).

Dans l'exemple de réalisation représenté sur les figures, ledit dispositif de verrouillage (28) est constitué d'une crémaillère (29). A l'une de ses extrémités, ladite crémaillère (29) est liée à un support (30), lui-même étant fixé audit capot supérieur (13), au moyen d'une articulation (31) de type pivot dont l'axe (3 la) est sensiblement parallèle à l'axe (24a) de ladite articulation (24) liant ledit capot (23) audit châssis (4). A l'autre extrémité, ladite crémaillère (29) comporte plusieurs encoches (32).

Lors du travail (figures 1, 2 et 4), ladite crémaillère (29) est éloignée dudit capot (23). Dans cet exemple de réalisation, ladite crémaillère (29) s'étend ainsi avantageusement au-dessus dudit capot supérieur (13). Ledit capot (23) occupe, par l'action de son poids, la position définie par le dispositif de retenue (25) et il peut, si besoin, pivoter librement vers le haut.

Lors du transport (figures 3 et 5), l'utilisateur pivote ladite crémaillère (29) autour de ladite articulation (31). Ainsi l'une desdites encoches (32) vient prendre appui contre une butée (33) fixée sur ledit capot (23). Ladite crémaillère (29) empêche ledit capot (23) de pivoter vers le haut. Ce dernier est donc maintenu dans la position définie par le réglage dudit dispositif de retenue (25). De ce fait, le battement dudit capot (12) est supprimé.

L'emplacement de chaque encoche (32) sur ladite crémaillère (29) correspond avantageusement à un réglage possible dudit capot (23) (figures 3 et 5). Ainsi pour verrouiller ledit capot (23) lors du transport, l'utilisateur n'a pas besoin d'intervenir sur ledit dispositif de retenue (25).

Ledit dispositif de verrouillage (28) comporte avantageusement en sus un ressort de traction (34) lié d'une part à ladite crémaillère (29) et d'autre part audit support (30). Ledit ressort (34) permet à ladite crémaillère (29) de conserver sa position de travail ou sa position de transport.

La fraise rotative (1) qui vient d'être décrite, n'est qu'un exemple de réalisation qui ne saurait en aucun cas limiter le domaine de protection défini par les revendications suivantes.

Ainsi, ladite fraise rotative (1) peut très bien comporter un dispositif de retenue (25) et/ou un dispositif de verrouillage (28) à chaque extrémité latérale dudit capot (23).

On peut également imaginer une fraise rotative (1) comportant deux capots (23), chacun couvrant respectivement une demi-largeur dudit rotor (5).

## Revendications

1. Machine de travail du sol comportant
- un châssis (4),
- un rotor (5), lié audit châssis (4), entraîné en rotation lors du travail autour d'un axe (5a), sensiblement horizontal, dirigé transversalement à une direction d'avance (3) de ladite machine,
- au moins un capot (23) lié audit châssis (4) au moyen d'une articulation (24) de type pivot dont l'axe (24a) est sensiblement parallèle à l'axe de rotation (5a) dudit rotor (5), et
- au moins un dispositif de retenue réglable (25) qui limite, uniquement vers le bas, le débattement angulaire dudit capot (23) autour de ladite articulation (24),
***caractérisée par le fait qu'***elle comporte en sus au moins un dispositif de verrouillage (28) qui limite vers le haut, lors du transport, le débattement angulaire dudit capot (23) en prenant appui contre une butée (33) fixée audit capot (23) afin de maintenir ce dernier dans la position définie par le réglage dudit dispositif de retenue (25).

2. Machine de travail du sol selon la revendication 1, ***caractérisée par le fait que*** ledit dispositif de verrouillage (28) peut occuper au moins une position de transport et au moins une position de travail.

3. Machine de travail du sol selon la revendication 2, ***caractérisée par le fait que*** ledit dispositif de verrouillage (28) est maintenu dans sa position de transport et/ou dans sa position de travail à l'aide d'un ressort (34).

4. Machine de travail du sol selon l'une des revendications 1 à 3, ***caractérisée par le fait que*** ledit dispositif de verrouillage (28) est lié audit châssis (4).

5. Machine de travail du sol selon l'une des revendications 1 à 4, ***caractérisée par le fait que*** ledit dispositif de verrouillage (28) comporte une crémaillère (29) munie de plusieurs encoches (32).

6. Machine de travail du sol selon la revendication 5, ***caractérisée par le fait que*** la position de chaque encoche (32) sur ladite crémaillère (29) correspond à un réglage possible dudit capot (23).

7. Machine de travail du sol selon l'une des revendications 1 à 6, ***caractérisée par le fait que*** ledit dispositif de retenue (25) est flexible.

8. Machine de travail du sol selon l'une des revendications 1 à 7, ***caractérisée par le fait que*** ledit dispositif de retenue (25) est de longueur variable.

9. Machine de travail du sol selon l'une des revendications 1 à 8, ***caractérisée par le fait que*** ledit dispositif de retenue (25) est lié d'une part audit capot (23) et d'autre part audit châssis (4).

10. Machine de travail du sol selon l'une des revendications 1 à 9, ***caractérisée par le fait que*** ledit dispositif de retenue (25) est une chaîne (26).

## Claims

1. Soil working machine comprising:
- a frame (4),
- a rotor (5), connected to the said frame (4), driven in rotation during work about a substantially horizontal axis (5a), directed transversely to a direction of travel (3) of the said machine,
- at least one hood (23) connected to the said frame (4) by means of an articulation (24) of the pivot type, the axis (24a) of which is substantially parallel to the axis of rotation (5a) of the said rotor (5), and
- at least one adjustable retaining device (25) limiting, solely downwards, the angular travel of the said hood (23) about the said articulation (24),
***characterized in* that** it further comprises at least one locking device (28) limiting during transport the upward angular travel of the said hood (23) by resting against a stop (33) fastened to the hood (23) in order to maintain the latter in the position defined through the adjustment of the said retaining device (25).

2. Soil working machine according to Claim 1, ***characterized in* that** the said locking device (28) may occupy at least a transport position and at least a work position.

3. Soil working machine according to Claim 2, ***characterized in* that** the said locking device (28) is kept in its transport position and/or in its work position by means of a spring (34).

4. Soil working machine according to one of Claims 1 to 3, ***characterized in* that** the said locking device (28) is connected to the said frame (4).

5. Soil working machine according to one of Claims 1 to 4, ***characterized in* that** the said locking device (28) comprises a rack (29) provided with several notches (32).

6. Soil working machine according to Claim 5, ***characterized in* that** the position of each notch (32) on the said rack (29) corresponds to a possible adjustment of the said hood (23).

7. Soil working machine according to one of Claims 1 to 6, ***characterized in* that** the said retaining device (25) is flexible.

8. Soil working machine according to one of Claims 1 to 7, ***characterized in* that** the said retaining device (25) is of variable length.

9. Soil working machine according to one of Claims 1 to 8, ***characterized in* that** the said retaining device (25) is connected on one hand to the said hood (23) and on the other hand to the said frame (4).

10. Soil working machine according to one of Claims 1 to 9, ***characterized in* that** the said retaining device (25) is a chain (26).

## Patentansprüche

1. Bodenbearbeitungsmaschine mit
- einem Rahmen (4),
- einem mit dem Rahmen (4) verbundenen Rotor (5), der im Betrieb um eine im Wesentlichen horizontale, quer zu einer Vorschubrichtung (3) der Maschine ausgerichtete Achse (5a) drehangetrieben wird,
- mindestens einer Haube (23), die mittels eines Gelenks (25) der Drehgelenkenart, dessen Achse (24a) im Wesentlichen parallel zur Drehachse (5a) des Rotors (5) verläuft, mit dem Rahmen (4) verbunden ist, und
- mindestens einer einstellbaren Zurückhaltvorrichtung (25), die die Winkelverschiebung der Haube (23) um das Gelenk (24) ausschliesslich nach unten begrenzt,
***dadurch gekennzeichnet,* dass** sie darüber hinaus mindestens eine Verriegelungsvorrichtung (28), die die Winkelverschiebung der Haube (23) während dem Transport nach oben begrenzt, in dem sie sich gegen ein Anschlag (33), der an der Haube (23) befestigt ist, abstützt um die letztere in der durch die Einstellung der Zurückhaltvorrichtung (25) bestimmte Stellung zu halten.

2. Bodenbearbeitungsmaschine nach Anspruch 1, ***dadurch gekennzeichnet,* dass** die Verriegelungsvorrichtung (28) mindestens eine Transportstellung und mindestens eine Arbeitsstellung einnehmen kann.

3. Bodenbearbeitungsmaschine nach Anspruch 2, ***dadurch gekennzeichnet,* dass** die Verriegelungsvorrichtung (28) mittels einer Feder (34) in ihrer Transportstellung und/oder in ihrer Arbeitsstellung gehalten wird.

4. Bodenbearbeitungsmaschine nach einem der Ansprüche 1 bis 3, ***dadurch gekennzeichnet,* dass** die Verriegelungsvorrichtung (28) mit dem Rahmen (4) verbunden ist.

5. Bodenbearbeitungsmaschine nach einem der Ansprüche 1 bis 4, ***dadurch gekennzeichnet,* dass** die Verriegelungsvorrichtung (28) eine mit mehreren Kerben (32) versehene Zahnstange (29) umfasst.

6. Bodenbearbeitungsmaschine nach Anspruch 5, ***dadurch gekennzeichnet,* dass** die Stellung jeder Kerbe (32) auf der Zahnstange (29) einer möglichen Einstellung der Haube (23) entspricht.

7. Bodenbearbeitungsmaschine nach einem der Ansprüche 1 bis 6, ***dadurch gekennzeichnet,* dass** die Zurückhaltvorrichtung (25) flexibel ist.

8. Bodenbearbeitungsmaschine nach einem der Ansprüche 1 bis 7, ***dadurch gekennzeichnet,* dass** die Länge der Zurückhaltvorrichtung (25) veränderlich ist.

9. Bodenbearbeitungsmaschine nach einem der Ansprüche 1 bis 8, ***dadurch gekennzeichnet,* dass** die Zurückhaltvorrichtung (25) einerseits mit der Haube (23) und andererseits mit dem Rahmen (4) verbunden ist.

10. Bodenbearbeitungsmaschine nach einem der Ansprüche 1 bis 9, ***dadurch gekennzeichnet,* dass** die Zurückhaltvorrichtung (25) eine Kette (26) ist.
